# EUROPÄISCHE PATENTSCHRIFT

(11) **EP 1 065 430 B1**
(45) Veröffentlichungstag und Bekanntmachung des Hinweises auf die Patenterteilung: **15.08.2007**
(21) Anmeldenummer: 99112457.9
(22) Anmeldetag: 30.06.1999
(51) Int. Cl.: F16L 59/14

(54) **Schachtsystem**
Prefabricated shaft system
Système de canalisation préfabriqué

(43) Veröffentlichungstag der Anmeldung: 03.01.2001
(73) Patentinhaber: Schiedel GmbH & Co., D-80995 München (DE)
(72) Erfinder: Höpler, Klaus, 85567 Grafing (DE); Schick, Peter, 35260 Stadtallendorf (DE); Pühringer, Herbert, 4542 Nussbach (AT)
(74) Vertreter: Müller, Frank Peter

(56) Entgegenhaltungen:
- EP-A- 0 203 684
- EP-A- 0 426 539
- EP-A- 0 798 504
- WO-A-91/14898
- US-A- 2 937 662

## Beschreibung

Die Erfindung betrifft ein Schachtsystem aus einzelnen vorgefertigten auf der Baustelle zusammenfügbaren Baueinheiten nach dem Oberbegriff des Anspruch 1. Ein solchen System ist bereich bekannt (US 2937 662).

Zur Vermeidung von Wärmeverlusten werden vor allem unter Berücksichtigung der Vorschriften von Wärmeschutzverordnungen insbesondere Wohnhäuser immer mehr gegen durchströmende Zugluft abgedichtet. Dennoch muß eine ausreichende Belüftung sichergestellt sein, wozu in den meisten Fällen ein vollständiger Luftaustausch innerhalb von zwei Stunden für einen Wohnraum ausreicht. Zur Entlüftung werden vertikale Schächte vorgesehen, beispielsweise gemauerte oder betonierte Schächte, in denen nachträglich Innenrohre montiert werden.

Zur Führung von Abwasserleitungen werden üblicherweise in den Wänden eines Hauses schachtförmige Aussparungen vorgesehen, in denen Abwasserrohre verlegt werden können.

Der vorliegenden Erfindung liegt das Problem zugrunde, ein Schachtsystem zur Verfügung zu stellen, das aus preiswert herstellbaren Baueinheiten besteht, die auf der Baustelle bereits beim Erstellen des Rohbaus schnell und von ungeübten Kräften zusammengefügt werden können, so daß das Schachtsystem beim Innenausbau eines Hauses gemeinsam mit den Wänden verputzt und/oder verkleidet werden kann und sowohl für ein Lüftungssystem zur zentralen Entlüftung eines Wohnhauses.

Die Erfindung ist von Anspruch 1 gekennzeichnet.

Bei dieser ist das Innenrohr als Muffenrohr ausgebildet und länger als die Außenschale und fixiert die Wärmeisolationsschicht das Innenrohr in der Außenschale.

Zur Bildung eines vertikalen Schachts dienen die Schachteinheiten mit geradem Innenrohr, zwischen denen an den gewünschten Stellen jeweils eine Anschlußeinheit mit seitlicher Anschlußöffnung eingebaut wird. An die seitliche Anschlußöffnung kann eine abzweigende Rohrleitung angeschlossen werden. Es kann auch ein Ansaugventil unmittelbar in die seitliche Anschlußöffnung eingesetzt werden.

Die Anschlußeinheit kann in einfacher Weise unter Verwendung eines handelsüblichen T-Stücks als Innenrohr hergestellt werden, wenn die Außenschale einen seitlichen Durchbruch für den Anschlußstutzen des T-Stücks und im Innenraum ein zumindest vom Durchbruch bis zur Ober- oder Unterseite reichende Erweiterung aufweist, um das T-Stück außermittig einsetzen zu können. Nach mittiger Justierung der Längsachse des T-Stücks zur Achse der Außenflächen der Außenschale schließt die seitliche Anschlußöffnung des T-Stücks bündig mit der Außenwand im Bereich des Durchbruchs ab.

Die tragfähige Außenschale ermöglicht den Aufbau eines durchgehenden vertikalen Schachts, weil die Außenschale sämtliche Gewichtskräfte aufnimmt, wenn beispielsweise aus mehreren Baueinheiten ein vom Kellerfußboden bis zum Dachboden führender vertikaler Schacht aufgebaut wird.

Die Führung des Fluids erfolgt im Innenrohr. Als Innenrohr kann beispielsweise ein in der Abwassertechnik übliches Muffenrohr aus Kunststoff eingesetzt werden. Dadurch ist eine rationelle und preiswerte Herstellung der Baueinheiten möglich.

Die vertikale Achse eines Schachts ist durch die ineinandergesteckten Innenrohre festgelegt. Infolge der Fixierung des Innenrohres in der Außenschale ist eine einfache Montage möglich, wobei die Außenwände zweier aufeinandergesetzter Baueinheiten fluchten.

Die bekannten Technologien für die Herstellung von Schornsteinelementen können eingesetzt werden, wenn die Außenabmessungen der Außenschale einem Mantelstein für Schornsteine entsprechen. Dadurch ist eine besonders rationelle und preiswerte Herstellung der Baueinheiten möglich.

Die Wärmeisolationsschicht verhindert die Abscheidung von Kondenswasser im Schachtsystem, so daß keine Vorkehrungen zur Wasserabführung erforderlich sind. Die Wärmeisolationsschich kann aus einer ausgehärteten Schaummasse wie Polymerschaum oder Schaumbeton bestehen.

Wenn die Wärmeisolationsschicht aus ausgehärteter Schaummasse besteht, so kann bei der Herstellung das Innenrohr in einer Lehre mittig zur Außenschale ausgerichtet werden. Anschließend wird der Zwischenraum mit frischer Schaummasse ausgegossen. Nach dem Aushärten des Schaumes ist das Innenrohr in der Außenschale dauerhaft fixiert.

Die Bildung eines Leitungskanals zur Aufnahme von Wasser-, Heizungs- und/oder Stromleitungen ist möglich, wenn in der Außenschale zumindest eine in Längsrichtung verlaufende Vertiefung vorgesehen ist. Nach Einbau der gewünschten Leitungen kann der Leitungskanal durch eine Blende verschlossen werden. Auf diese Weise ist eine sehr rationelle Montage der Leitungen im Bauwerk möglich, und im Falle einer erforderlichen Reparatur sind die Leitungen ohne Stemmarbeiten nach Abnahme der Blende zugänglich.

Insbesondere bei Einsatz des Schachtsystems für ein Lüftungssystem zur zentralen Entlüftung eines Wohnhauses ist es vorteilhaft, wenn die Außenschale eine rotationssymmetrische äußere Querschnittsform aufweist und die Wärmeisolationsschicht das Innenrohr koaxial zur Außenschale fixiert. Als rotationssymmetrische Querschnittsform kommt eine runde, eine acht- oder sechseckige oder eine quadratische Form in Frage. Bevorzugt wird eine quadratische Querschnittsform.

Bei der Montage müssen die Innenrohre zweier übereinander angeordneter Bauelemente dicht miteinander verbunden werden. Dadurch bestimmen deren miteinander fluchtende Achsen die seitliche Lage der Bauelemente. Da die Wärmeisolationsschicht das Innenrohr koaxial zur Außenschale fixiert, sind automatisch auch die Außenwände der rotationssymmetrischen Außenschale fluchtend zueinander ausgerichtet. Bei Bauelementen mit quadratischem Querschnitt können daher zwei aufeinander angeordnete Bauelemente in ihren horizontalen Ebenen um 0°, 90°, 180° oder 270° gegeneinander gedreht aufeinander gesetzt werden, wobei die Außenwände miteinander fluchten. Dies ist insbesondere beim Einbau einer Anschlußeinheit wichtig.

Wenn für ein Lüftungssystem als Baueinheit zusätzlich eine Schalldämpfereinheit vorgesehen ist, kann diese sowohl gegen "Telefonieschall" als auch gegen "Installationsschall" einer gegebenenfalls eingebauten Ventilationseinheit isolieren. Es versteht sich, daß eine besonders starke Schalldämpfung durch zwei oder mehr übereinander angeordnete Schalldämpfereinheiten erreicht wird.

Wenn das Innenrohr im Bereich der Schalldämpfereinheit erweitert und an seiner Innenwandung schallabsorbierend ausgekleidet ist, tritt eine Verminderung des Lüftungsquerschnitts durch die Auskleidung nicht ein.

Sofern bei einem Lüftungssystem der natürliche Luftzug nicht ausreicht, kann zusätzlich eine Ventilationseinheit vorgesehen sein. Die Ventilationseinheit wird vorteilhafterweise im Bereich des Dachraumes eines Hauses installiert.

Zur Abführung der Abluft kann das Schachtsystem eine Dachdurchgangseinheit aufweisen. Diese kann als Dachdurchgang ein handelsübliches Dunstrohr aufweisen. Während für die Lage des vertikalen Schachtes bauliche Gegegebenheiten maßgebend sind, ist die Lage des Dachdurchgangs bei einem Schrägdach von der Position der Dachsparren und der Dachlatten abhängig. Ein Achsenversatz zwischen vertikalem Schacht und Dachdurchgang kann ausgeglichen werden, wenn die Verbindung des Dachdurchgangs mit dem vertikalen Schacht mittels eines flexiblen Schlauchs erfolgt. Über die Dachdurchgangseinheit kann die Abfuhr der Luft erfolgen.

In der Zeichnung ist ein bevorzugtes Ausführungsbeispiel der Erfindung dargestellt, das im folgenden näher erläutert wird.

Es zeigt
- Fig. 1: eine Schachteinheit mit geradem Innenrohr 12 für ein Schachtsystem in der Draufsicht,
- Fig. 2: die Schachteinheit aus Fig. 1 im Längsschnitt entlang der Linie II - II,
- Fig. 3: eine Anschlußeinheit mit T-förmigem Innenrohr in perspektivischer längsgeschnittener Darstellung,
- Fig. 4: eine weitere Schachteinheit in der Draufsicht.

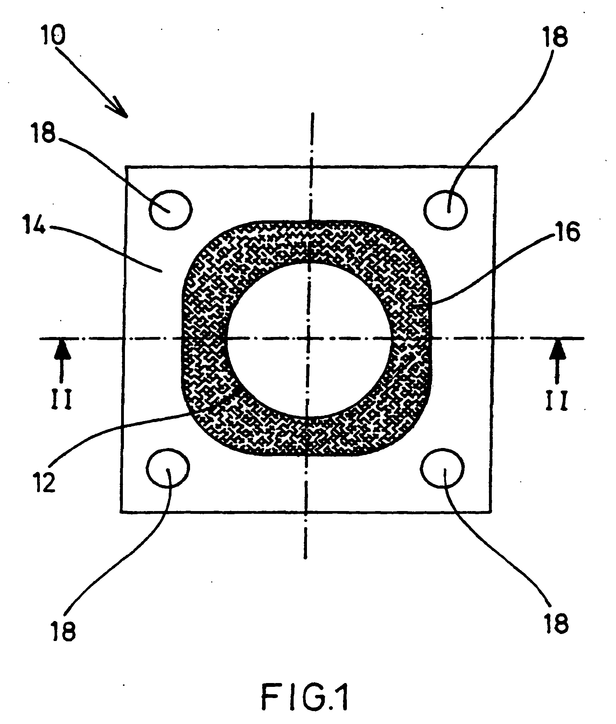

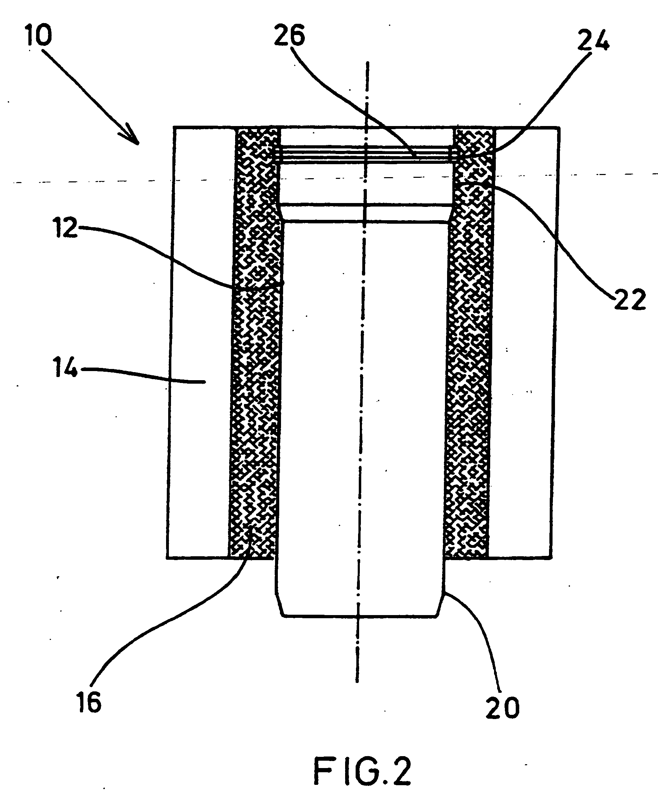

In Fig. 1 ist eine als Schachteinheit 10 mit geradem Innenrohr 12 ausgeführte erfindungsgemäße Baueinheit für ein Schachtsystem in der Draufsicht und in Fig. 2 im Längsschnitt entlang der Linie II - II aus Fig. 1 dargestellt. Die Schachteinheit 10 weist eine tragfähige Außenschale 14 aus Leichtbeton auf, deren Außenabmessungen einem Mantelstein für Schornsteine entsprechen. Die Außenschale 14 weist eine quadratische Querschnittsform mit den Seitenlängen von 280 mm und eine Höhe von 332 mm auf. Das Innenrohr 12 ist ein Muffenrohr aus Kunststoff mit einem Außendurchmesser von 125 mm. Das Innenrohr 12 ist mittels einer Wärmeisolationsschicht 16 aus ausgehärtetem Schaumbeton koaxial zur Außenschale 14 fixiert. Die Außenschale 12 besitzt eine Wanddicke von 45 mm. Der Innenraum besitzt ebenfalls eine quadratische Querschnittsform, wobei die Ecken mit einem Radius von 60 mm ausgerundet sind. In den Eckbereichen der Außenschale 12 sind vier Durchgangslöcher 18 mit einem Durchmesser von jeweils 30 mm vorgesehen, um das Einbringen von Zugankern in einen aus mehreren Schachteinheiten 10 zusammengesetzten Schacht zu ermöglichen. Die Achsen der Durchgangslöcher 18 sind jeweils 35 mm von den Außenflächen der Außenschale 12 entfernt, so daß sie in einem Quadrat von 210 mm Seitenlänge angeordnet sind. In Fig. 2 ist deutlich dargestellt, daß das Innenrohr 12 länger ist als die Außenschale 14, wobei die Außenschale 12 eine Höhe von 332 mm und das Innenrohr 12 eine Länge von 378 mm besitzt. Der als Spitzende ausgebildete untere Endabschnitt 20 des Innenrohrs 12 ragt daher um 46 mm aus der Unterseite der Außenschale 14 hervor. Beim Zusammensetzen mehrerer Schachteinheiten 10 zu einem Schacht wird der untere Endabschnitt 20 der aufgesetzten Schachteinheit 10 in den muffenförmig erweiterten oberen Endabschnitt 22 des Innenrohrs 12 der darunter befindlichen Baueinheiten 10 eingeschoben. Im oberen Endabschnitt 22 ist eine nach außen weisende umlaufende Nut angeordnet, in die eine kreisringförmige Lippendichtung 26 eingelegt ist, um die Innenrohre 12 gas- und flüssigkeitsdicht miteinander zu verbinden.

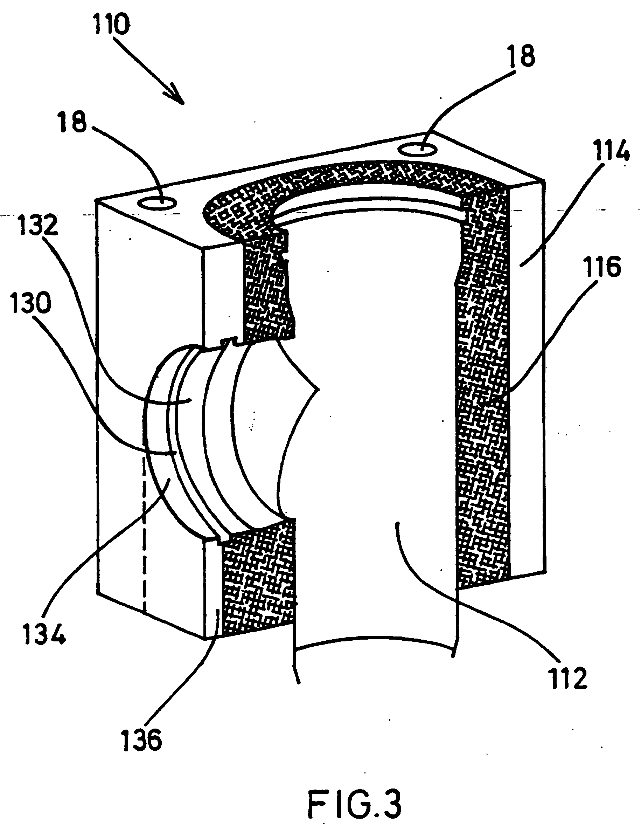

Fig. 3 zeigt in perspektivischer längsgeschnittener Darstellung eine weitere Baueinheit, die als Anschlußeinheit 110 mit T-förmig ausgebildetem Innenrohr 112 ausgeführt ist, und eine seitliche Anschlußöffnung 130 aufweist. Die seitliche Anschlußöffnung 130 ist an einem muffenförmig ausgebildeten seitlichen Anschlußstutzen 132 des T-förmig ausgebildeten Innenrohrs 112 angeordnet und durchsetzt einen Durchbruch 134 in der Seitenwand 136 der Außenschale 114. Die Anschlußöffnung 130 schließt bündig mit der Außenwandung der Außenschale 114 ab.

Von der Unterseite her ist die Seitenwand 136 bis zum Durchbruch 134 dünner ausgeführt als in den übrigen Bereichen, so daß sich eine Erweiterung des Innenraumes der Außenschale 114 ergibt. Dadurch kann das T-förmig ausgebildete Innenrohr 112 vor dem Vergießen mit Schaummasse außermittig eingeschoben werden. Nach koaxialer Justierung der Längsachse des T-förmig ausgebildeten Innenrohrs 112 zur Achse der Außenflächen der Außenschale 114 kann der Zwischenraum mit Schaummasse verfüllt werden. Nach dem Aushärten der Schaummasse ist das Innenrohr 112 in der Außenschale 114 fixiert.

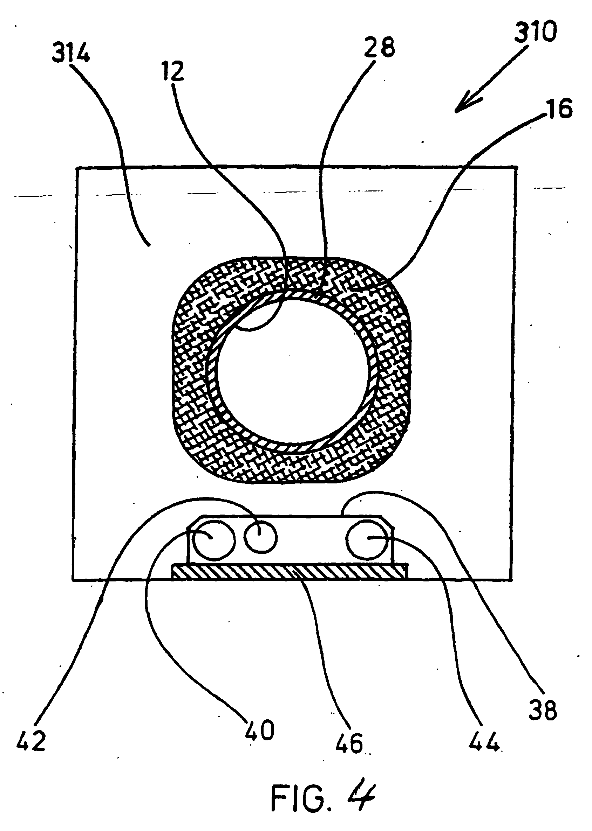

In Fig. 4 ist in der Draufsicht eine weitere Schachteinheit 310 dargestellt. Die Schachteinheit 310 weist ein gerades Innenrohr 12, eine Außenschale 314, eine Wärmeisolationsschicht 16 und eine Schalldämmschicht 28 aus schalldämmendem Material auf. In der Außenschale 314 ist eine in Längsrichtung verlaufende - Vertiefung 38 vorgesehen, um einen Leitungskanals zu bilden, in dem hier Heizungs- und Wasserleitungen 40, 42, 44 angeordnet sind. Nach erfolgter Leitungsinstallation kann die Vertiefung 38 mit einer Blende 46 abgedeckt werden.

## Patentansprüche

1. Schachtsystem aus einzelnen vorgefertigten auf der Baustelle zusammenfügbaren Baueinheiten mit mindestens einer Schachteinheit (10, 310) mit geradem Innenrohr (12) und mindestens einer Anschlusseinheit (110) mit T-förmig ausgebildetem Innenrohr (112) mit seitlicher Anschlussöffnung (130), bei dem die Baueinheiten eine tragfähige Außenschale (14, 114, 314) und eine Wärmeisolationsschicht (16, 116) aufweisen, die das Innenrohr (12, 112) in der Außenschale (14, 114, 314) fixiert, und das Innenrohr (12, 112) länger als die Außenschale (14, 114, 314) ausgebildet ist,
**dadurch gekennzeichnet,**
**dass** das Innenrohr (12, 112) als Muffenrohr ausgebildet ist und dass das Schachtsystem Teil eines Lüftungssystems zur zentralen Entlüftung eines Wohnhauses ist und als Baueinheit zusätzlich eine Schalldämpfereinheit und/oder eine Ventilationseinheit vorgesehen ist.

2. Schachtsystem nach Anspruch 1,
**dadurch gekennzeichnet,**
**dass** die Außenabmessungen der Außenschale (14, 114, 314) einem Mantelstein für Schornsteine entsprechen.

3. Schachtsystem nach Anspruch 1 oder 2,
**dadurch gekennzeichnet,**
**dass** die Außenschale (14, 114, 314) aus Leichtbeton besteht.

4. Schachtsystem nach einem der vorhergehenden Ansprüche,
**dadurch gekennzeichnet,**
**dass** die Wärmeisolationsschicht (16, 116) aus einer ausgehärteten Schaummasse, wie Polymerschaum oder Schaumbeton besteht.

5. Schachtsystem nach einem der vorhergehenden Ansprüche,
**dadurch gekennzeichnet,**
**dass** in der Außenschale (314) zumindest eine in Längsrichtung verlaufende Vertiefung (38) zur Bildung eines Leitungskanals vorgesehen ist.

6. Schachtsystem nach einem der vorhergehenden Ansprüche,
**dadurch gekennzeichnet,**
**dass** die Außenschale (14, 114, 314) eine rotationssymmetrische äußere Querschnittsform aufweist und dass die Wärmeisolationsschicht (16, 116) das Innenrohr (12, 112) koaxial zur Außenschale (14, 114, 314) fixiert.

7. Schachtsystem nach einem der vorhergehenden Ansprüche,
**dadurch gekennzeichnet,**
**dass** eine Dachdurchgangseinheit vorgesehen ist.

8. Schachtsystem nach einem der vorhergehenden Ansprüche,
**dadurch gekennzeichnet,**
**dass** zwischen Innenrohr (12) und Außenschale (14, 314) eine Schalldämmschicht (28) vorgesehen ist.

## Claims

1. Shaft system composed of individual prefabricated building units which may be assembled on the building site, having at least one shaft unit (10, 310) with a straight inner pipe (12) and at least one junction unit (110) having an T-shaped inner pipe (112) with a lateral junction aperture (130), wherein the building units have a portable outer shell (14, 114, 314) and a heat insulation layer (16, 116), which fixes the inner pipe (12, 112) in the outer shell (14, 114, 314), and the inner pipe (12, 112) is formed longer than the outer shell (14, 114, 314), **characterised in that** the inner pipe (12, 112) is formed as a socket pipe and **in that** the shaft system is part of a ventilation system for the central venting of a residential building and as a building unit additionally a sound-damping unit and/or a ventilation unit is provided.

2. Shaft system according to claim 1, **characterised in that** the external dimensions of the outer shell (14, 114, 314) correspond to those of a casing brick for chimneys.

3. Shaft system according to claim 1 or 2, **characterised in that** the outer shell (14, 114, 314) consists of breeze concrete.

4. Shaft system according to one of the preceding claims, **characterised in that** the heat insulation layer (16, 116) consists of a hardened foam compound, such as polymer foam or porous concrete.

5. Shaft system according to one of the preceding claims, **characterised in that** in the outer shell (314) at least one recess (38) extending in the longitudinal direction is provided in order to form a duct.

6. Shaft system according to one of the preceding claims, **characterised in that** the outer shell (14, 114, 314) has an outer cross-sectional shape which is rotationally symmetrical and **in that** the heat insulation layer (16, 116) fixes the inner pipe (12, 112) coaxially to the outer shell (14, 114, 314).

7. Shaft system according to one of the preceding claims, **characterised in that** a roof passage unit is provided.

8. Shaft system according to one of the preceding claims, **characterised in that** between the inner pipe (12) and the outer shell (14, 314) a sound- damping layer (28) is provided.

## Revendications

1. Système de gaine composé d'unités modulaires individuelles préfabriquées pouvant être assemblées sur le chantier, comprenant au moins une unité de gaine (10, 310) avec tube intérieur droit (12) et au moins une unité de raccordement (110) avec tube intérieur en forme de T (112) présentant une ouverture de raccordement latérale (130), dans lequel les unités modulaires comportent une enveloppe extérieure porteuse (14, 114, 314) et une couche thermo-isolante (16, 116) qui fixe le tube intérieur (12, 112) dans l'enveloppe extérieure (14, 114, 314), et le tube intérieur (12, 112) est plus long que l'enveloppe extérieure (14, 114, 314),
**caractérisé en ce**
**que** le tube intérieur (12, 112) est réalisé sous forme de tube à manchons et que le système de gaine fait partie d'un système de ventilation pour l'aération centrale d'un immeuble d'habitation et qu'il est prévu en plus en tant qu'unité modulaire une unité d'insonorisation et/ou une unité de ventilation.

2. Système de gaine selon la revendication 1,
**caractérisé en ce**
**que** les dimensions extérieures de l'enveloppe extérieure (14, 114, 314) correspondent à celles d'une brique de conduit pour cheminées.

3. Système de gaine selon la revendication 1 ou 2,
**caractérisé en ce**
**que** l'enveloppe extérieure (14, 114, 314) est en béton léger.

4. Système de gaine selon l'une des revendications précédentes,**caractérisé en ce**
**que** la couche thermo-isolante (16, 116) est composée d'une masse de mousse durcie comme de la mousse polymère ou du béton mousse.

5. Système de gaine selon l'une des revendications précédentes,
**caractérisé en ce**
**qu'**il est prévu dans l'enveloppe extérieure (314) au moins un renfoncement (38) s'étendant en direction longitudinale pour former un conduit de câbles.

6. Système de gaine selon l'une des revendications précédentes,
**caractérisé en ce**
**que** l'enveloppe extérieure (14, 114, 314) présente une forme de section extérieure à symétrie de révolution et que la couche thermo-isolante (16, 116) fixe le tube intérieur (12, 112) coaxialement à l'enveloppe extérieure (14, 114, 314).

7. Système de gaine selon l'une des revendications précédentes,
**caractérisé en ce**
**qu'**il est prévu une unité de traversée de toit.

8. Système de gaine selon l'une des revendications précédentes,
**caractérisé en ce**
**qu'**il est prévu une couche insonorisante (28) entre le tube intérieur (12) et l'enveloppe extérieure (14, 314).
